# FASCICULE DE BREVET EUROPEEN

(11) **EP 0 622 580 B1**
(45) Date de publication et mention de la délivrance du brevet: **17.06.1998**
(21) Numéro de dépôt: 94400871.3
(22) Date de dépôt: 22.04.1994
(51) Int. Cl.: F16L 47/02, F16L 41/08

(54) **Insert, raccord pour conduite tubulaire, son procédé de réalisation et l'outillage de mise en oeuvre du procédé**
Rohreinsatz, Verfahren zu seiner Herstellung und das Werkzeug zur Durchführung des Verfahrens
Pipe insert, its process of manufacturing and the tool device for carrying out this process

(30) Priorité: 29.04.1993 FR 9305068
(43) Date de publication de la demande: 02.11.1994
(73) Titulaire: HUTCHINSON, F-75008 Paris (FR)
(72) Inventeur: Balez, Joel, F-45700 Villemandeur (FR); Godeau, Denis, F-45260 Vieilles Maisons sur Joudry (FR)
(74) Mandataire: Orès, Bernard

(56) Documents cités:
- EP-A- 0 191 700
- EP-A- 0 313 488
- BE-A- 900 920
- FR-A- 2 359 359
- FR-A- 2 506 892

## Description

L'invention se rapporte principalement à un insert, à un raccord pour conduite tubulaire comportant un tel insert, notamment un raccord en T, au procédé de réalisation d'un tel raccord pour conduite tubulaire et à un outillage perfectionné pour la mise en oeuvre du procédé.

Il est connu de réaliser des raccords en T sur des conduites tubulaires en élastomère permettant d'exercer des couples importants sans compromettre l'étanchéité du raccord. Notamment, un tel raccord permet la fixation par vissage d'une pièce avec interposition d'un joint métallique.

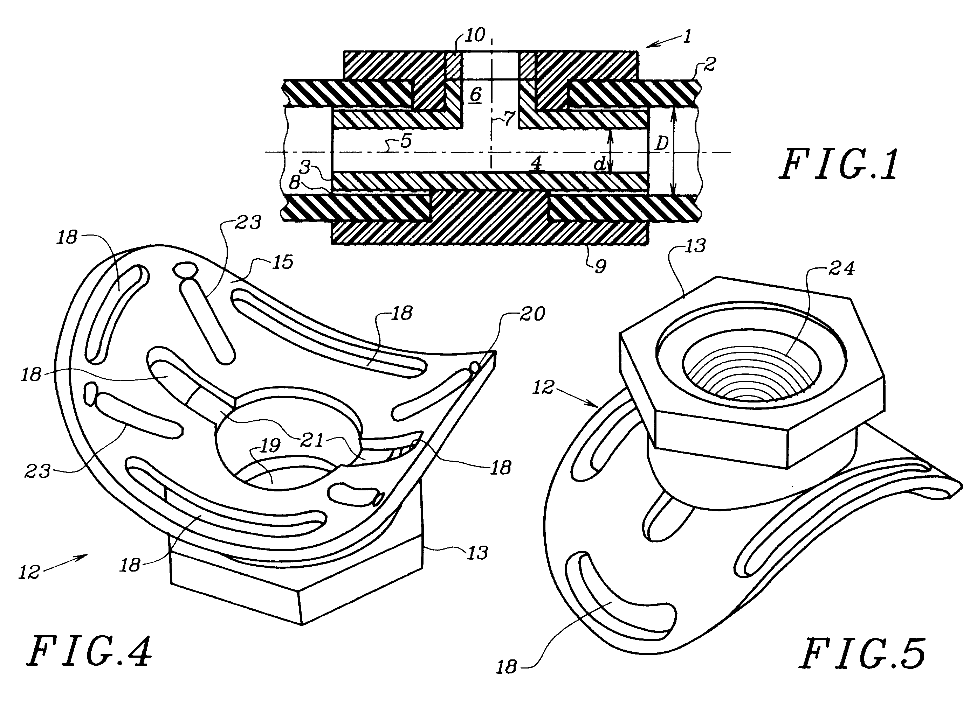

Comme il sera expliqué plus en détail en référence à la figure 1, la réalisation de tels raccords est extrêmement coûteuse et complexe.

De plus, la section de passage de fluide de la conduite tubulaire est réduite par la présence d'un insert interne.

EP-A-191 700 décrit un écrou dont l'épaisseur est plus faible que la largeur, susceptible de constituer un insert dépourvu de surface conformée à la surface externe d'un tuyau. Il en résulte que l'insert ne participe pas du tout à l'ancrage du surmoulage sur le tube. Notamment, l'insert, ancré dans le surmoulage par les ponts d'élastomère établis dans les ouvertures, transmet intégralement au surmoulage les couples de torsion transmis par un bouchon. Ainsi, le dispositif du EP-A-191 700 est limité à des couples de torsion modérés.

BE-A-900 920 décrit un insert dépourvu de filetage, susceptible d'être apposé sur une conduite tubulaire métallique. L'insert de ce document n'est donc pas destiné à être soumis à des couples importants par vissage d'un raccord. De plus, la conduite tubulaire métallique oppose une résistance à la déformation supérieure à celle d'une conduite tubulaire en caoutchouc. Enfin, le matériau d'enrobage est une résine époxy armée de fibres de verre qui est également un matériau rigide. Ainsi, l'homme du métier n'a aucune raison de pratiquer dans l'insert du BE-A-900 920 des ouvertures de fixation et d'ancrage, pour s'opposer aux déformations de la conduite tubulaire et du surmoulage en cas d'un hypothétique couple exercé sur l'insert.

C'est par conséquent un but de la présente invention d'offrir un raccord sur une conduite tubulaire en élastomère permettant d'exercer des couples importants sans compromettre l'étanchéité du raccord.

C'est également un but de la présente invention d'offrir un tel raccord présentant une excellente fiabilité même dans des conditions sévères d'utilisation.

C'est aussi un but de la présente invention d'offrir un raccord dont la mise en oeuvre est simple.

C'est également un but de la présente invention d'offrir un raccord d'un prix de revient modéré.

C'est aussi un but de la présente invention d'offrir un raccord pour conduite tubulaire ne réduisant pas la section de passage interne du fluide dans ladite conduite tubulaire.

Ces buts sont atteints par la mise en oeuvre d'un insert appliqué sur la conduite tubulaire permettant son surmoulage avec de l'élastomère.

L'invention a principalement pour objet un insert pour former par surmoulage partiel un raccord en T sur une conduite tubulaire comprenant :
- une surface d'appui sur une conduite tubulaire sensiblement conformée à une portion de la surface de la paroi externe de la conduite tubulaire, des ouvertures traversantes débouchant sur la surface d'appui;
- un embout comprenant une conduite tubulaire débouchant sur ladite surface d'appui.

L'invention a également pour objet un insert, caractérisé en ce que la surface d'appui forme sensiblement une portion d'un cylindre d'axe A 1 et que l'axe A 2 de la conduite tubulaire de l'embout croise à angle droit ledit axe A1.

L'invention a également pour objet un insert, caractérisé en ce que la longueur de la surface d'appui, selon une circonférence dudit cylindre auquel est conformée la surface d'appui, est supérieure à la longueur de la surface d'appui mesurée parallèlement à l'axe A 1.

L'invention a également pour objet un insert, caractérisé en ce que l'embout comporte une collerette, et en ce que la conduite tubulaire dudit embout est taraudée ou comporte un insert métallique taraudé, notamment un insert en laiton.

L'invention a également pour objet un insert, caractérisé en ce qu'il comporte des canaux reliant au niveau de la surface d'appui des ouvertures traversantes à la paroi interne de la conduite tubulaire de l'embout.

L'invention a également pour objet un insert, caractérisé en ce qu'il comporte des moyens de guidage d'écoulement de matière de surmoulage, notamment des nervures disposées sur la surface d'appui.

L'invention a également pour objet un insert, caractérisé en ce que la surface d'appui comporte des espaceurs, notamment de forme hémisphérique, susceptibles d'assurer le positionnement relatif de l'insert par rapport à la surface externe d'une conduite tubulaire lors de l'opération du surmoulage.

L'invention a également pour objet un raccord en T sur une conduite tubulaire en élastomère d'axe A 1 comprenant une conduite tubulaire d'axe A 2 perpendiculaire à l'axe A 1, caractérisé en ce qu'il comporte un insert, selon l'invention, dont la surface d'appui est noyée dans un surmoulage en élastomère.

L'invention a également pour objet un raccord, caractérisé en ce que la géométrie et la dureté de l'élastomère du surmoulage et la géométrie de l'insert sont adaptées pour obtenir une résistance à des couples autour de l'axe A 2 supérieure ou égale à 24 Nm.

L'invention a également pour objet un raccord, caractérisé en ce le surmoulage en élastomère a la forme d'un plot.

L'invention a également pour objet un raccord, caractérisé en ce que le surmoulage en élastomère a sensiblement la forme d'un manchon.

L'invention a également pour objet un procédé de fabrication d'un raccord en T sur une conduite tubulaire en élastomère comportant les étapes consistant à :
- perforer ladite conduite tubulaire en élastomère;
- appliquer sur la paroi externe d'une conduite tubulaire en élastomère une surface d'appui d'un insert, dans laquelle des ouvertures traversantes ont été ménagées, ledit insert comportant une conduite tubulaire formant embout, une extrémité de ladite conduite tubulaire formant embout débouchant sur ladite surface d'appui en vis à vis de la perforation de la conduite tubulaire ;
- surmouler la surface d'appui de l'insert avec de l'élastomère ;
- vulcaniser l'élastomère du surmoulage.

L'invention a également pour objet un procédé, caractérisé en ce qu'il comporte une étape de fixation de l'insert sur la conduite tubulaire en élastomère à l'aide d'une broche.

L'invention a également pour objet un procédé, caractérisé en ce qu'il comporte une étape consistant à :
- faire pénétrer un noyau dans la conduite tubulaire, ledit noyau comportant un trou ;
- faire pénétrer une section de la broche à travers la conduite tubulaire formant embout dans le trou du noyau à travers une ouverture formée dans la paroi de la conduite tubulaire en élastomère.

L'invention a également pour objet un procédé, caractérisé en ce qu'il comporte une étape antérieure au surmoulage consistant à immobiliser dans un moule la broche de façon à assurer le maintien de l'insert lors du surmoulage.

L'invention a également pour objet un procédé, caractérisé en ce que le surmoulage est effectué avec un élastomère ayant une dureté supérieure à 50 Shore A.

L'invention a également pour objet un outillage pour réaliser le raccord selon l'invention comprenant :
- un insert comprenant une surface d'appui sur une conduite tubulaire sensiblement conformée à une portion de la surface de la paroi externe de la conduite tubulaire, des ouvertures traversantes débouchant sur la surface d'appui;
- une broche comportant des moyens de maintien provisoire de l'insert sur une conduite tubulaire en élastomère, des moyens pour perforer la paroi de ladite conduite tubulaire en élastomère et des moyens pour collaborer avec des moyens de maintien d'un moule de surmoulage;
- un noyau pour pénétrer dans une conduite tubulaire en élastomère;
- un moule pour recevoir la conduite tubulaire en élastomère emmanchée sur le noyau et sur laquelle est fixé un insert par l'intermédiaire de la broche, ledit moule comportant une empreinte de la surface externe du surmoulage à réaliser et des moyens de maintien provisoires de la broche pendant l'opération d'introduction d'élastomère.

L'invention a également pour objet un outillage, caractérisé en ce que la broche comporte des moyens de maintien provisoire coopérant avec les moyens de maintien du noyau, notamment la broche comporte une tige susceptible de pénétrer dans un trou du noyau.

L'invention a également pour objet un outillage, caractérisé en ce que la broche comporte un épaulement formant le moyen de maintien de la broche dans le moule et en ce que le moule comporte un évidement de réception dudit épaulement.

L'invention a également pour objet un outillage, caractérisé en ce que l'empreinte du surmoulage correspond à un manchon entourant la conduite tubulaire en élastomère.

L'invention a également pour objet un outillage, caractérisé en ce que l'empreinte du surmoulage correspond à un plot formé sur la conduite tubulaire en élastomère.

L'invention sera mieux comprise au moyen de la description ci-après et des figures annexées données comme des exemples non limitatifs et sur lesquelles:
- la figure 1 est une vue en coupe d'un raccord de type connu;
- la figure 2 est une vue en perspective d'un premier exemple de réalisation d'un raccord selon la présente invention ;
- la figure 3 est une vue en perspective d'un deuxième exemple de réalisation d'un raccord selon la présente invention ;
- la figure 4 est une première vue en perspective de l'exemple préféré de réalisation d'un insert selon la présente invention ;
- la figure 5 est une seconde vue en perspective de l'insert de la figure 4 ;
- la figure 6 est une vue de l'insert de la figure 4 du côté de sa surface d'appui sur une conduite tubulaire;
- la figure 7 est une élévation de l'insert de la figure 4 ;
- la figure 8 est une coupe de l'insert de la figure 4 selon les lignes VIII-VIII de la figure 6 ;
- la figure 9 est une coupe de l'insert de la figure 4 selon les lignes IX-IX de la figure 6 ;
- la figure 10 est une vue de côté d'une broche susceptible d'être mise en oeuvre pour la réalisation du raccord selon la présente invention ;
- la figure 11 est une vue en coupe longitudinale d'un noyau susceptible d'être mis en oeuvre pour la réalisation d'un raccord selon la présente invention ;
- la figure 12 est une vue en coupe transversale d'un moule susceptible d'être mis en oeuvre pour la réalisation d'un raccord selon la présente invention ;
- la figure 13 est une vue en coupe longitudinale d'un exemple de réalisation d'un raccord selon l'invention ;
- la figure 14 est une vue en coupe transversale du raccord de la figure 13;
- la figure 15 est une vue en coupe d'une variante de réalisation d'un insert selon l'invention ;
- la figure 16 est une vue de dessus de l'insert de la figure 15;
- la figure 17 est une vue en perspective d'un exemple de réalisation d'un raccord selon l'invention comportant un insert des figures 15 et 16.

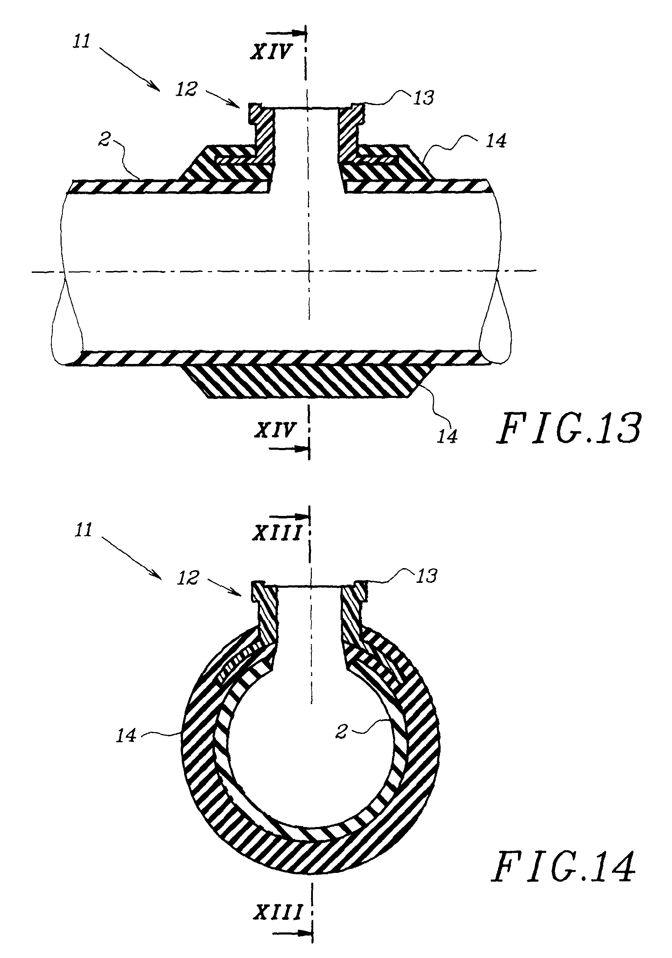

Sur les figures 1 à 17, l'on a utilisé les mêmes références pour désigner les mêmes éléments.

Sur la figure 1, l'on peut voir un raccord 1 de type connu monté sur une conduite tubulaire 2 en élastomère ayant un diamètre interne D. Le raccord 1 comporte une pièce interne en T 3 réalisée en matière plastique. La pièce interne en T 3 comporte une conduite tubulaire 4 d'axe 5 ayant un diamètre interne d et un diamètre externe sensiblement égal au diamètre interne D de la conduite tubulaire 2. La pièce interne en T 3 comprend également une conduite tubulaire 6, d'axe 7, perpendiculaire à l'axe 5. Un écrou 10 en laiton est disposé à l'extrémité de la conduite tubulaire 6. Lors de la réalisation du raccord 1, l'on sectionne la conduite tubulaire 2 selon un plan perpendiculaire à son axe et l'on introduit à force chaque extrémité de la conduite 4 de la pièce interne en T 3 sur une des extrémités de la conduite tubulaire 2 résultant de la découpe. La liaison entre la pièce interne 3 en matière plastique et la conduite tubulaire 2 en élastomère peut être améliorée par la présence de la colle 8. Un manchon externe 9 en matière plastique assure le sertissage du raccord 1 sur la conduite tubulaire 2 en élastomère.

Le raccord de type connu présente de nombreux inconvénients. Dans la mesure où l'on sectionne la conduite tubulaire 2 et où il n'est pas aisé d'obtenir une bonne adhésion entre la matière plastique de la pièce interne en T 3 et du manchon 9 avec l'élastomère de la conduite tubulaire 2, il est nécessaire de prendre énormément de précautions longues et coûteuses pour assurer l'étanchéité de ce raccord. De plus, la section de passage de fluide de la conduite tubulaire 2 est réduite, au niveau du raccord 1 dans un rapport égal à D²/d².

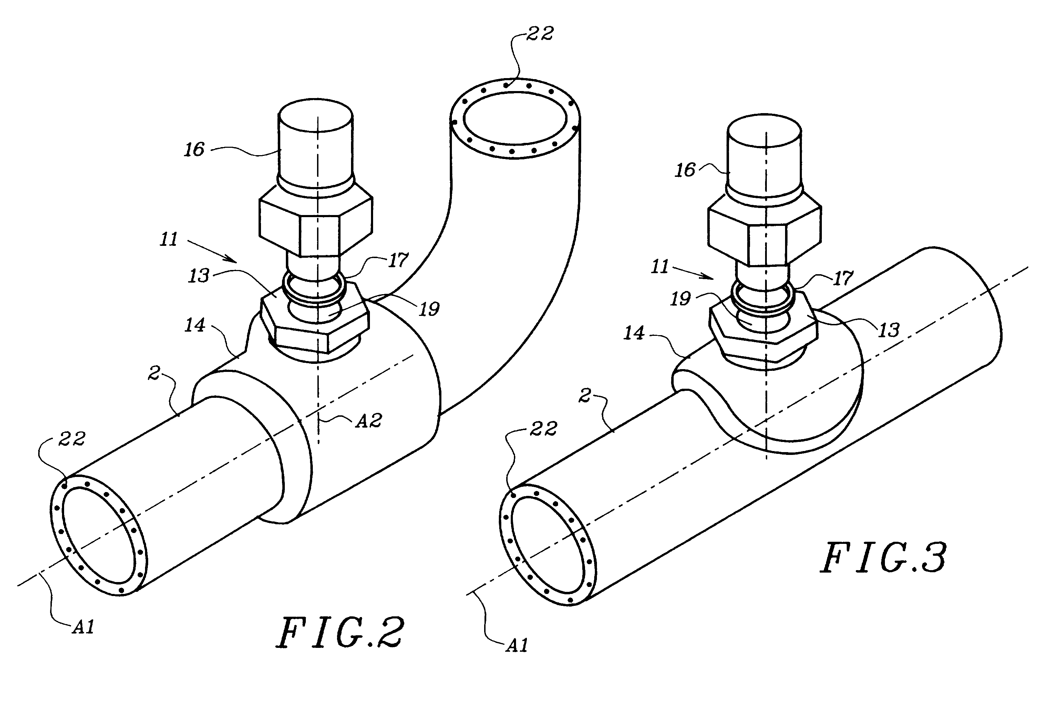

Sur la figure 2, l'on peut voir un premier exemple de réalisation d'un raccord 11 selon la présente invention disposé sur une conduite tubulaire 2 en élastomère avantageusement renforcée par des fils ou fibres 22.

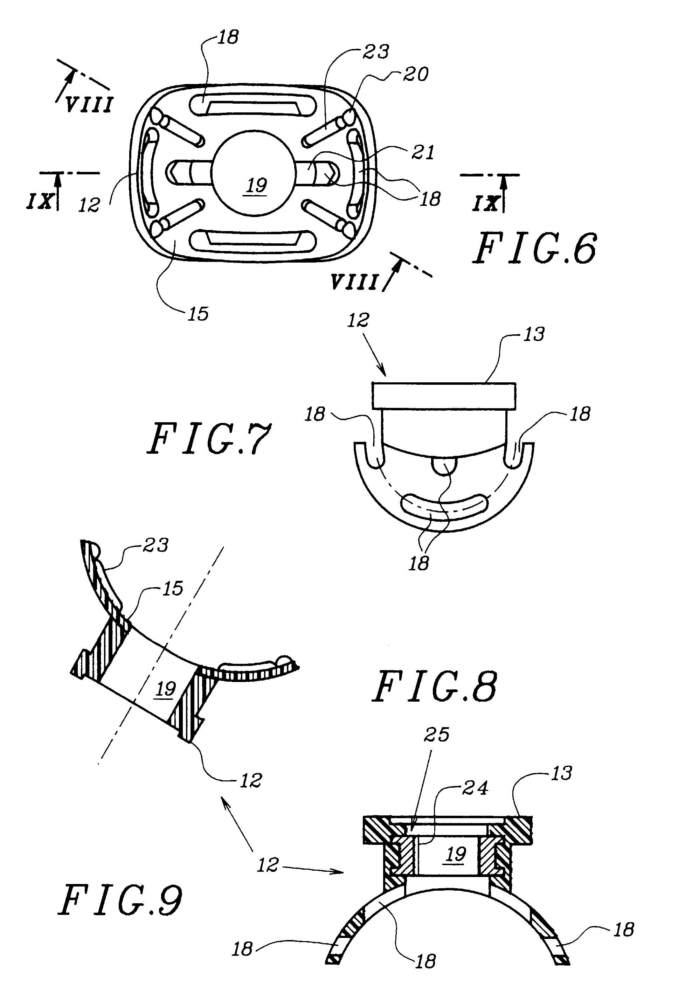

Comme il sera expliqué ci-dessus, le raccord 11 selon l'invention comporte un insert 12 (illustré sur les figures 4 à 9), prenant appui sur une partie de la surface externe de la conduite tubulaire 2, surmoulé avec de l'élastomère sur la conduite tubulaire 2 et dont l'on peut voir sur les figures 2 et 3 une collerette 13 formant embout de fixation. Avantageusement, l'extension d'une surface d'appui 15 de l'insert 12 autour de la conduite tubulaire est supérieure à la largeur de l'insert mesuré parallèlement à l'axe de la conduite tubulaire 2. Avantageusement, le raccord 11 selon la présente invention est un raccord en T, l'axe A 1 de la conduite tubulaire 2 croisant à angle droit l'axe A 2 de la conduite tubulaire 19 se terminant par la collerette 13.

Dans l'exemple de réalisation illustré sur la figure 2, le surmoulage 14 a sensiblement la forme d'un manchon entourant complètement la conduite tubulaire 2 et s'étendant au-delà de la surface d'appui 15 de l'insert 12 sur la conduite tubulaire 2.

Dans l'exemple de réalisation illustré sur la figure 3, le surmoulage 14 forme un plot reprenant approximativement le contour externe de la surface d'appui 15 de l'insert 12.

L'exemple de réalisation du raccord selon l'invention illustré sur la figure 2 présente des performances supérieures et, notamment, une meilleure résistance à l'éclatement de la conduite tubulaire 2. Bien que présentant des performances inférieures, la variante de réalisation illustrée sur la figure 3 est réalisée avec une quantité d'élastomères moindre et présente une masse inférieure.

La Demanderesse peut garantir une tenue aux couples de serrage de 24 Nm, sans dégradation de l'étanchéité, d'un exemple de réalisation de raccord 11 des figures 2 et 3 permettant notamment de plonger un thermo contact 16 dans un liquide de refroidissement d'un moteur à combustion interne canalisé par la conduite tubulaire 2, les couples de serrage effectivement supportés allant jusqu'à 50 Nm.

Dans les cas de réalisation illustrés sur les figures 2 et 3, les couples de serrage supportés permettent l'interposition d'un joint en métal 17 entre la collerette 13 et le thermo contact 16.

Sur les figures 4 à 9, l'on peut voir l'exemple préféré de l'insert 12 selon la présente invention.

La surface d'appui 15 de l'insert 12 est sensiblement conformée à la surface externe de la conduite tubulaire 2. Une extension importante de cette surface d'appui 15 autour de la conduite augmente le couple de serrage susceptible d'être supporté par le raccord selon l'invention. La surface d'appui 15 de l'exemple de l'insert 12 illustré est sensiblement ovale.

Avantageusement, la surface d'appui 15 de l'insert 12 comporte des ouvertures traversantes 18 permettant le passage d'élastomères et améliorant ainsi la fixation de l'insert 12 sur la conduite tubulaire 2.

Dans l'exemple avantageux illustré sur les figures 4 à 9, l'insert 12 comporte quatre ouvertures traversantes 18 disposées le long des bords de la surface d'appui 15 ainsi que deux ouvertures diamétralement opposées placées à proximité d'une conduite tubulaire 19 terminée à l'opposé de la surface d'appui 15 par la collerette 13.

Avantageusement, au moins trois espaceurs 20 (quatre dans l'exemple illustré), avantageusement hémisphériques, sont disposés sur la surface d'appui 15. Les espaceurs permettent, d'une part, la formation d'une couche d'élastomère entre la surface d'appui 15 de l'insert 12 et la surface externe de la conduite tubulaire 2 avec passage d'élastomère dans les ouvertures 18 et, d'autre part, améliorent le positionnement relatif de l'insert 12 par rapport à la conduite tubulaire 2 lors du surmoulage.

Des canaux 21 sont avantageusement ménagés dans la surface d'appui 15 entre des ouvertures 18 et la canalisation 19. Les canaux 21 favorisent, lors du surmoulage de l'insert 12, l'arrivée de l'élastomère au niveau de la conduite tubulaire 19. Cela est particulièrement avantageux dans le cas où la conduite tubulaire 2 est armée avec des fils ou fibres 22 (figures 2 et 3). L'élastomère arrivant par les canaux 21 noient les extrémités des fils ou fibres 22 évitant la propagation du fluide normalement canalisé par la conduite tubulaire 2 par des canaux parasites formés par ces fils ou fibres de renforcement de la conduite tubulaire 2.

Des nervures 23 sont avantageusement disposées sur la surface d'appui 15 de part et d'autre des ouvertures 18 et/ou des canaux 21. Les nervures 23 assurent, d'une part, le renforcement mécanique de l'insert 12 et, d'autre part, canalisent le flux d'élastomère de l'ouverture 18 vers le canal 21 et la conduite tubulaire 19. Les nervures 23 sont avantageusement disposées avec un angle par rapport à la circonférence du tube sensiblement égal à 30° supportant ainsi une part importante des efforts induits dans le raccord 11 lors de l'application des couples de vissage ou de dévissage du thermo contact 16.

Avantageusement, l'insert 12 selon la présente invention est réalisé en matière plastique rigide ayant une grande résistance mécanique et une excellente stabilité thermique. L'on utilise avantageusement un polyamide 6.6 chargé en fibres, par exemple en fibres de verre, par exemple à 30 %. Avantageusement, la matière plastique est protégée contre l'hydrolyse et la glycolyse.

Toutefois, il est bien entendu que la mise en oeuvre d'autres matériaux, comme par exemple des polypropylènes, des PPS ou des métaux, comme par exemple le laiton, ne sort pas du cadre de la présente invention.

Avantageusement, comme illustré sur la figure 5, la conduite tubulaire 19 comprend un taraudage 24. Le taraudage peut être directement réalisé sur la conduite tubulaire 19. Avantageusement, le taraudage 24 est réalisé dans un insert métallique 25, avantageusement réalisé en laiton.

Il est bien entendu que l'invention n'est pas limitée à un insert dont la conduite tubulaire 19 se termine par une collerette 13. Au contraire, tout insert 12 comportant une conduite tubulaire 19 débouchant sur la surface d'appui 15 est conforme à la présente invention.

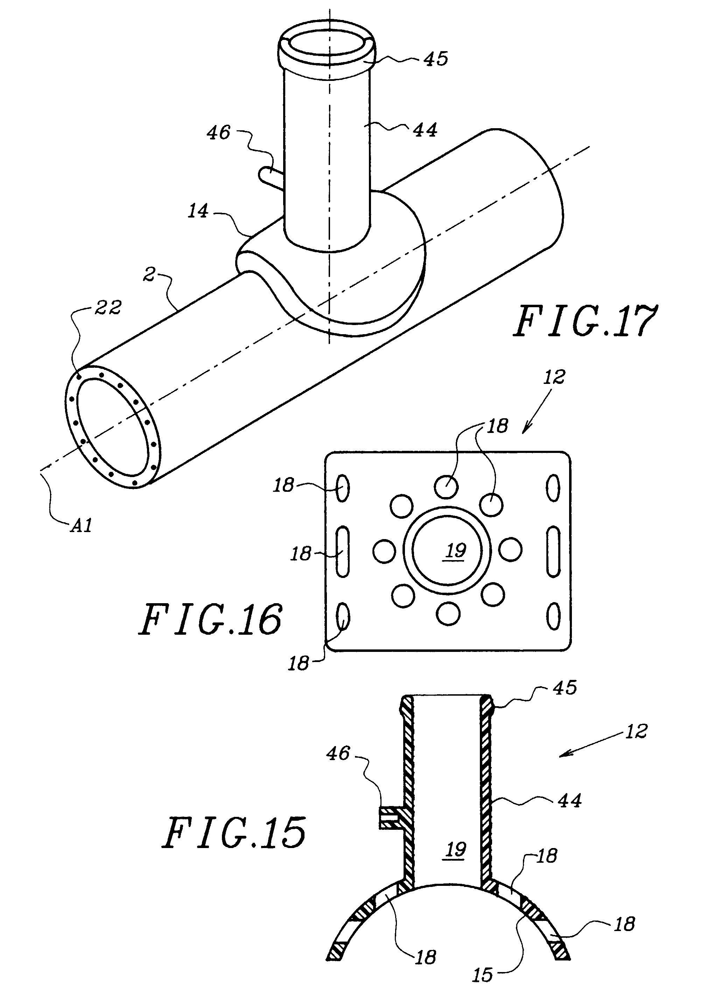

Avantageusement, la conduite tubulaire 19 est terminée par des moyens de fixation et/ou de connexion, notamment à une autre conduite tubulaire ou à un réservoir, comme par exemple une bride de fixation, un embout à baïonnette ou, comme illustré sur les figures 15 à 17, un embout pour insertion à force de l'extrémité d'une conduite tubulaire souple. Cet embout comporte par exemple une zone cylindrique 44 terminée par un bourrelet 45 améliorant la tenue mécanique de la conduite tubulaire souple ainsi que l'étanchéité. Il peut être avantageux de munir l'insert 12 d'un ergot de positionnement 46.

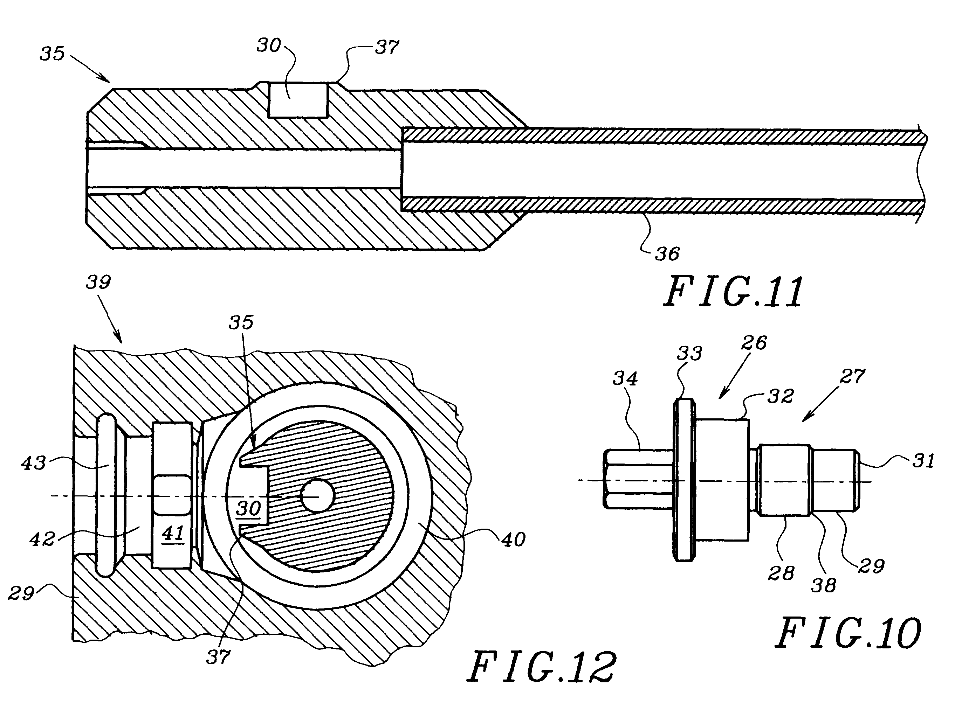

Sur la figure 10, l'on peut voir une broche 26 avantageusement mise en oeuvre pour la réalisation du raccord 11 selon la présente invention. La broche 26 comporte une tige 27 dont un filetage 28 peut être vissé dans le filetage 24 de l'insert 12 et une section cylindrique 29 qui peut pénétrer dans un trou borgne 30 pratiqué dans un noyau 35 illustré sur la figure 11. L'extrémité 31 de la tige 27 assure la perforation, avantageusement le percement d'une ouverture dans la conduite tubulaire 2, lors de l'application de la broche, par exemple munie d'un insert 12, sur la conduite tubulaire 2. La tige 27, à l'opposé de l'extrémité 31, est prolongée par une partie cylindrique 32, un épaulement 33 formant moyen de maintien de la broche 26 dans un moule, et des moyens d'entraînement en rotation 34, par exemple une tige hexagonale.

La tige 27, notamment au niveau du filetage 28, forme une réserve empêchant, lors du surmoulage, l'obturation de l'ouverture pratiquée dans la paroi de la conduite tubulaire 2 ainsi que de la conduite tubulaire 19 de l'insert 12.

Sur la figure 11, l'on peut voir un noyau 35 sensiblement cylindrique dont le diamètre externe correspond sensiblement au diamètre interne de la conduite tubulaire 2.

Dans l'exemple illustré, le noyau 35 creux est prolongé par une tige tubulaire 36. Avantageusement, le noyau 35 comporte autour du trou 30 une excroissance plane 37 formant la surface d'appui pour un épaulement 38 ménagé entre la section cylindrique 29 et le filetage 28 de la tige 27 de la broche 26.

Sur la figure 12, l'on peut voir un exemple de moule 39 permettant le surmoulage d'un insert 12 en vue de la réalisation d'un raccordement en T, selon l'invention, de la figure 2. L'on a représenté sur la figure 12 le noyau 35 dans la position de moulage. Le moule 39 comporte une cavité 40 destinée à recevoir la conduite tubulaire 2, munie du noyau 35, de l'insert 12 et de la broche 26 ainsi que l'élastomère assurant la formation du manchon 14. Dans le prolongement du trou borgne 30, le moule 39 comporte une cavité 41, par exemple, hexagonale de réception de la collerette 13 de l'insert 12, une cavité cylindrique 42 de réception du cylindre 32 de la broche 26 et des moyens 43 de réception des moyens de maintien 33 de la broche 26, par exemple une cavité sensiblement cylindrique.

Nous allons maintenant décrire l'exemple préféré de mise en oeuvre du procédé selon la présente invention.

L'on fait pénétrer le noyau 35 dans la conduite tubulaire 2 jusqu'à ce que l'axe du trou borgne 30 corresponde à l'axe A 2 de la conduite tubulaire 19 à former. L'on dispose un insert 12 sur la paroi externe de la conduite tubulaire 2 de manière à faire correspondre l'axe de la collerette 13 avec l'axe A 2. L'on fait pénétrer la tige 27 dans l'ouverture de la collerette 13 de l'insert 12. L'on fait pénétrer le filetage 28 dans le taraudage 24, l'extrémité 31 de la tige 27 assurant le perçage de la paroi de la conduite tubulaire 2.

En variante, l'on perfore tout d'abord la paroi de la conduite tubulaire 2 avec la broche 26 ou avec un autre outil, puis l'on positionne l'insert 12 avec coïncidence de l'axe de la conduite tubulaire 19 avec l'axe de la perforation.

Dans une première variante de réalisation, la pièce découpée de la paroi de la conduite tubulaire 2 pénètre dans le trou borgne 30.

Dans un second exemple de réalisation, l'on dévisse la broche 26 pour enlever la pièce provenant du percement de la paroi de la conduite tubulaire 2. Dans tous les cas, l'on fait pénétrer la section cylindrique 29 de la tige 27 de la broche 26 dans le taraudage du trou 30.

Par exemple, l'on entraîne avec une clé à pipe non représentée les moyens d'entraînement 34 de la broche 26. L'on a ainsi positionné l'insert 12 par rapport à la paroi de la conduite tubulaire 2 et de l'ouverture réalisée dans cette paroi par la broche 26. A ce moment, les espaceurs hémisphériques 20 prennent appui sur la surface externe de la conduite tubulaire 2. L'ensemble formé par la broche 26, une partie de la conduite tubulaire 2 et du noyau 35, est placé dans le moule 39. L'on referme le moule 39 et l'on assure l'injection de l'élastomère surmoulant l'insert 12. La vulcanisation de l'élastomère est obtenue avantageusement par chauffage, soit à l'intérieur du moule 39, soit après démoulage.

Dans une variante de mise en oeuvre du procédé selon la présente invention, l'on met en place dans le moule 39 une portion de conduite tubulaire flexible munie du noyau 35 et de l'insert 12, le pas de vis 28 de la tige 27 de la broche 26 étant vissé dans le taraudage 24 de l'insert 12 et la section cylindrique 29 pénétrant dans le trou borgne 30 après fermeture du moule.

Avantageusement, l'on surmoule l'insert 12 avec un élastomère relativement dur, par exemple avec un élastomère dont la dureté est supérieure à 50 Shore A, de préférence égale à 70 Shore A.

Lors de la vulcanisation, l'élastomère du surmoulage 14 adhère parfaitement à l'élastomère de la conduite tubulaire 2 assurant une fixation particulièrement performante et sûre.

Toutefois, le surmoulage réalisé avec un plastomère ou un mélange d'élastomère et de plastomère ne sort pas du cadre de la présente invention.

De même, la réalisation de raccords sur des conduites tubulaires en plastomère ou en mélange d'élastomère et de plastomère ne sort pas du cadre de la présente invention.

La présente invention s'applique à la réalisation de raccords, notamment en T, dans les circuits hydrauliques et/ou pneumatiques.

La présente invention s'applique principalement à la réalisation de raccords dans des conduites tubulaires en élastomère véhiculant des fluides dans un moteur à combustion interne d'une voiture automobile. Notamment, un raccord selon la présente invention est particulièrement avantageux pour plonger un thermo contact dans le fluide de refroidissement canalisé par une conduite tubulaire à la sortie ou à l'entrée d'un échangeur de chaleur d'un circuit de refroidissement d'un tel moteur.

## Revendications

1. Insert pour former par surmoulage partiel un raccord en T (11) sur une conduite tubulaire (2) comprenant:
- une surface d'appui (15) sur une conduite tubulaire (2) sensiblement conformée à une portion de la surface de la paroi externe de la conduite tubulaire, des ouvertures traversantes (18) débouchant sur la surface d'appui (15);
- un embout comprenant une conduite tubulaire (19) débouchant sur ladite surface d'appui (15).

2. Insert selon la revendication 1, caractérisé en ce que la surface d'appui (15) forme sensiblement une portion d'un cylindre d'axe A 1 et que l'axe A 2 de la conduite tubulaire (19) de l'embout croise à angle droit ledit axe A 1.

3. Insert selon la revendication 2, caractérisé en ce que la longueur de la surface d'appui (15), selon une circonférence dudit cylindre auquel est conformée la surface d'appui (15), est supérieure à la longueur de la surface d'appui (15) mesurée parallèlement à l'axe A 1.

4. Insert selon l'une quelconque des revendications précédentes, caractérisé en ce que l'embout comporte une collerette (13), et en ce que la conduite tubulaire (19) dudit embout est taraudée ou comporte un insert métallique taraudé (25), notamment un insert en laiton.

5. Insert selon l'une quelconque des revendications précédentes, caractérisé en ce qu'il comporte des canaux (21) reliant au niveau de la surface d'appui (15) des ouvertures traversantes (18) à la paroi interne de la conduite tubulaire (19) de l'embout.

6. Insert selon la revendication 5, caractérisé en ce qu'il comporte des moyens (23) de guidage d'écoulement de matière de surmoulage, notamment des nervures disposées sur la surface d'appui (15).

7. Insert selon l'une quelconque des revendications précédentes, caractérisé en ce que la surface d'appui (15) comporte des espaceurs (20), notamment de forme hémisphérique, susceptibles d'assurer le positionnement relatif de l'insert par rapport à la surface externe d'une conduite tubulaire (2) lors de l'opération du surmoulage.

8. Raccord en T sur une conduite tubulaire en élastomère d'axe A 1 comprenant une conduite tubulaire (19) d'axe A 2 perpendiculaire à l'axe A 1, caractérisé en ce qu'il comporte un insert (12), selon l'une quelconque des revendications précédentes, dont la surface d'appui (15) est noyée dans un surmoulage (14) en élastomère.

9. Raccord selon la revendication 8, caractérisé en ce que la géométrie et la dureté de l'élastomère du surmoulage (14) et la géométrie de l'insert (12) sont adaptées pour obtenir une résistance à des couples autour de l'axe A 2 supérieure ou égale à 24 Nm.

10. Raccord selon la revendication 8 ou 9, caractérisé en ce le surmoulage (14) en élastomère a la forme d'un plot.

11. Raccord selon la revendication 8 ou 9, caractérisé en ce que le surmoulage (14) en élastomère a sensiblement la forme d'un manchon.

12. Procédé de fabrication d'un raccord en T sur une conduite tubulaire en élastomère comportant les étapes consistant à :
- perforer ladite conduite tubulaire (2) en élastomère;
- appliquer sur la paroi externe d'une conduite tubulaire (2) en élastomère une surface d'appui (15) d'un insert (12), dans laquelle des ouvertures traversantes (18) ont été ménagées, ledit insert comportant une conduite tubulaire (19) formant embout, une extrémité de ladite conduite tubulaire (19) formant embout débouchant sur ladite surface d'appui (15) en vis à vis de la perforation de la conduite tubulaire (2) ;
- surmouler la surface d'appui (15) de l'insert (12) avec de l'élastomère;
- vulcaniser l'élastomère du surmoulage.

13. Procédé selon la revendication 12, caractérisé en ce qu'il comporte une étape de fixation de l'insert (12) sur la conduite tubulaire en élastomère (2) à l'aide d'une broche (26).

14. Procédé selon la revendication 13, caractérisé en ce qu'il comporte une étape consistant à :
- faire pénétrer un noyau (35) dans la conduite tubulaire (2), ledit noyau comportant un trou (30) ;
- faire pénétrer une section de la broche (26) à travers la conduite tubulaire (19) formant embout dans le trou (30) du noyau (35) à travers une ouverture formée dans la paroi de la conduite tubulaire en élastomère (2).

15. Procédé selon la revendication 13 ou 14, caractérisé en ce qu'il comporte une étape antérieure au surmoulage consistant à immobiliser dans un moule (39) la broche (26) de façon à assurer le maintien de l'insert (12) lors du surmoulage.

16. Procédé selon l'une quelconque des revendications 12 à 15, caractérisé en ce que le surmoulage est effectué avec un élastomère ayant une dureté supérieure à 50 Shore A.

17. Outillage pour réaliser le raccord selon les revendications 8 à 11 comprenant:
- un insert (12) comprenant une surface d'appui (15) sur une conduite tubulaire (2) sensiblement conformée à une portion de la surface de la paroi externe de la conduite tubulaire, des ouvertures traversantes (18) débouchant sur la surface d'appui (15);
- une broche (26) comportant des moyens (27, 32) de maintien provisoire de l'insert (12) sur une conduite tubulaire en élastomère (2), des moyens (31) pour perforer la paroi de ladite conduite tubulaire en élastomère (2) et des moyens (33) pour collaborer avec des moyens de maintien (43) d'un moule (39) de surmoulage;
- un noyau (35) pour pénétrer dans une conduite tubulaire en élastomère (2) ;
- un moule (39) pour recevoir la conduite tubulaire en élastomère (2) emmanchée sur le noyau (35) et sur laquelle est fixé un insert (12) par l'intermédiaire de la broche (26), ledit moule (39) comportant une empreinte de la surface externe du surmoulage (14) à réaliser et des moyens de maintien provisoires (43) de la broche (26) pendant l'opération d'introduction d'élastomère.

18. Outillage selon la revendication 17, caractérisé en ce que la broche (26) comporte des moyens (27, 29) de maintien provisoire coopérant avec les moyens de maintien du noyau (35), notamment la broche (26) comporte une tige (27) susceptible de pénétrer dans un trou (30) du noyau (35).

19. Outillage selon la revendication 17 ou 18, caractérisé en ce que la broche (26) comporte un épaulement (33) formant le moyen de maintien de la broche (26) dans le moule (39) et en ce que le moule (39) comporte un évidement de réception (43) dudit épaulement (33).

20. Outillage selon la revendication 17, 18 ou 19, caractérisé en ce que l'empreinte (40) du surmoulage (14) correspond à un manchon entourant la conduite tubulaire en élastomère (2).

21. Outillage selon la revendication 17, 18, ou 19, caractérisé en ce que l'empreinte (40) du surmoulage (14) correspond à un plot formé sur la conduite tubulaire en élastomère (2).

## Patentansprüche

1. Einsatz zum Ausbilden einer T-Verbindung (11) an einer röhrenförmigen Leitung (2) mittels teilweisen Aufformens, wobei der Einsatz aufweist:
- eine Auflagefläche (15) zum Auflegen auf eine röhrenförmige Leitung (2), die im wesentlichen der Form eines Abschnitts der Oberfläche der Außenwandung der röhrenförmigen Leitung folgt, wobei Durchgangsöffnungen (18) in die Auflagefläche (15) münden;
- ein Ansatzstück mit einer röhrenförmigen Leitung (19), welche in die Auflagefläche (15) mündet.

2. Einsatz nach Anspruch 1, dadurch gekennzeichnet, daß die Auflagefläche (15) im wesentlichen einen Abschnitt eines Zylinders mit einer Achse A1 bildet, und daß die Achse A2 der röhrenförmigen Leitung (19) des Ansatzstückes die Achse Al im rechten Winkel schneidet.

3. Einsatz nach Anspruch 2, dadurch gekennzeichnet, daß die Länge der Auflagefläche (15) entlang dem Umfang des Zylinders, dem die Form der Auflagefläche (15) folgt, größer als die parallel zur Achse A1 gemessene Länge der Auflagefläche (15) ist.

4. Einsatz nach einem der vorhergehenden Ansprüche, dadurch gekennzeichnet, daß das Ansatzstück einen Bund (13) aufweist, und daß die röhrenförmige Leitung (19) des Ansatzstückes mit einem Innengewinde versehen ist bzw. einen mit einem Innengewinde versehenen Einsatz (25) aus Metall, insbesondere einen Einsatz aus Messing, aufweist.

5. Einsatz nach einem der vorhergehenden Ansprüche, dadurch gekennzeichnet, daß er Kanäle (21) aufweist, die auf Höhe der Auflagefläche (15) Durchgangsöffnungen (18) mit der Innenwand der röhrenförmigen Leitung (19) des Ansatzstückes verbinden.

6. Einsatz nach Anspruch 5, dadurch gekennzeichnet, daß er Mittel (23) zum Leiten des Fließweges von Aufformmaterial, insbesondere auf der Auflagefläche (15) vorgesehene Rippen, aufweist.

7. Einsatz nach einem der vorhergehenden Ansprüche, dadurch gekennzeichnet, daß die Auflagefläche (15) Abstandhalter (20) insbesondere mit Halbkugelform aufweist, welche zum relativen Anordnen des Einsatzes in Bezug auf die Außenfläche einer röhrenförmigen Leitung (2) beim Arbeitsschritt des Aufformens geeignet sind.

8. T-Verbindung an einer röhrenförmigen Leitung aus Elastomer mit einer Achse A1, welche eine röhrenförmige Leitung (19) mit einer zur Achse A1 senkrechten Achse A2 aufweist, dadurch gekennzeichnet, daß sie einen Einsatz (12) nach einem der vorhergehenden Ansprüche aufweist, dessen Auflagefläche (15) in eine Aufformung (14) aus Elastomer eingebettet ist.

9. Verbindung nach Anspruch 8, dadurch gekennzeichnet, daß die Geometrie und die Härte des Elastomers der Aufformung (14) sowie die Geometrie des Einsatzes (12) dazu ausgelegt sind, um die Achse A2 eine Festigkeit gegen Momente von mehr als bzw. gleich 24 Nm zu erzielen.

10. Verbindung nach Anspruch 8 oder 9, dadurch gekennzeichnet, daß die Aufformung (14) aus Elastomer die Form eines Kontakthöckers aufweist.

11. Verbindung nach Anspruch 8 oder 9, dadurch gekennzeichnet, daß die Aufformung (14) aus Elastomer im wesentlichen die Form einer Manschette aufweist.

12. Verfahren zur Herstellung einer T-Verbindung an einer röhrenförmigen Leitung aus Elastomer, das die folgenden Arbeitsabschnitte aufweist:
- Perforieren der röhrenförmigen Leitung (2) aus Elastomer;
- Auflegen einer Auflagefläche (15) eines Einsatzes (12), in der Durchgangsöffnungen (18) vorgesehen sind, auf die Außenwandung der röhrenförmigen Leitung (2) aus Elastomer, wobei der Einsatz eine ein Ansatzstück bildende röhrenförmige Leitung (19) aufweist, und wobei ein Ende der röhrenförmigen Leitung (19) ein der Perforation der röhrenförmigen Leitung (2) gegenüberliegend in die Auflagefläche (15) mündendes Ansatzstück bildet;
- Aufformen der Auflagefläche (15) des Einsatzes (12) mit Elastomer;
- Vulkanisieren des Elastomers der Aufformung.

13. Verfahren nach Anspruch 12, dadurch gekennzeichnet, daß es einen Arbeitsabschnitt des Befestigens des Einsatzes (12) an der röhrenförmigen Leitung (2) aus Elastomer mittels eines Stiftes (26) aufweist.

14. Verfahren nach Anspruch 13, dadurch gekennzeichnet, daß es einen Arbeitsabschnitt aufweist bestehend aus:
- Einbringen eines Formkerns (35) in die röhrenförmige Leitung (2), wobei der Formkern ein Loch (30) aufweist;
- Einbringen eines Abschnitts des Stiftes (26) durch die ein Ansatzstück bildende röhrenförmige Leitung (19) in das Loch (30) des Formkerns (35) durch eine in der Wand der röhrenförmigen Leitung (2) aus Elastomer hergestellte Öffnung hindurch.

15. Verfahren nach Anspruch 13 oder 14, dadurch gekennzeichnet, daß es einen dem Aufformen vorausgehenden Arbeitsabschnitt aufweist, der darin besteht, den Stift (26) in einer Form (39) derart festzulegen, daß der Halt des Einsatzes (12) während des Aufformens gewährleistet ist.

16. Verfahren nach einem der Ansprüche 12 bis 15, dadurch gekennzeichnet, daß das Aufformen mittels eines Elastomers mit einer Shore-A-Härte von mehr als 50 durchgeführt wird.

17. Werkzeug für die Herstellung der Verbindung nach einem der Ansprüche 8 bis 11, welches aufweist:
- einen Einsatz (12) mit einer Auflagefläche (15) zum Auflegen auf eine röhrenförmige Leitung(2), die im wesentlichen der Form eines Abschnitts der Oberfläche der Außenwandung der röhrenförmigen Leitung folgt, wobei Durchgangsöffnungen (18) in die Auflagefläche (15) münden;
- einen Stift (26) mit Mitteln (27, 32) zum vorläufigen Halten des Einsatzes (12) auf einer röhrenförmigen Leitung (2) aus Elastomer, Mitteln (31) zum Perforieren der Wandung der röhrenförmigen Leitung (2) aus Elastomer, und Mitteln (33) zum Zusammenwirken mit Haltemitteln (43) einer Form (39) für das Aufformen;
- einen Formkern (35) zum Einbringen in eine röhrenförmige Leitung (2) aus Elastomer;
- eine Form (39) zum Aufnehmen der auf den Formkern (35) aufgeschobenen röhrenförmigen Leitung (2) aus Elastomer, an der ein Einsatz (12) mit Hilfe des Stiftes (26) befestigt ist, wobei die Form (39) eine Matrize für die Außenfläche der auszuführenden Aufformung (14) sowie Mittel (43) zum vorläufigen Halten des Stiftes (26) für die Dauer des Arbeitsschrittes des Einbringens von Elastomer aufweist.

18. Werkzeug nach Anspruch 17, dadurch gekennzeichnet, daß der Stift (26) Mittel (27, 29) zum vorläufigen Halten aufweist, die mit den Mitteln zum Halten des Formkerns (35) zusammenwirken, wobei der Stift (26) insbesondere einen in ein Loch (30) des Formkerns (35) einführbaren Bolzen (27) aufweist.

19. Werkzeug nach Anspruch 17 oder 18, dadurch gekennzeichnet, daß der Stift (26) eine Schulter (33) aufweist, die das Mittel zum Halten des Stiftes (26) in der Form (39) darstellt, und daß die Form (39) eine Aussparung (43) zum Aufnehmen der Schulter (33) aufweist.

20. Werkzeug nach Anspruch 17, 18 oder 19, dadurch gekennzeichnet, daß die Matrize (40) bzw. der Formhohlraum für die Aufformung (14) einer die röhrenförmige Leitung (2) aus Elastomer umgebenden Manschette entspricht.

21. Werkzeug nach Anspruch 17, 18 oder 19, dadurch gekennzeichnet, daß die Matrize (40) bzw. der Formhohlraum für die Aufformung (14) einem auf der röhrenförmigen Leitung (2) aus Elastomer ausgebildeten Kontakthöcker entspricht.

## Claims

1. Insert for forming a T-shaped connection (11) on a tubular conduit (2) by partial overmoulding, comprising:
a bearing surface (15) on a tubular conduit (2) substantially conformed to a portion of the surface of the outer wall of the tubular conduit, through-holes (18) opening out on the bearing surface (15);
an endpiece comprising a tubular conduit (19) opening out onto said bearing surface (15).

2. Insert according to claim 1, characterised in that the bearing surface (15) substantially forms a portion of a cylinder of axis A1 and the axis A2 of the tubular conduit (19) of the endpiece intersects said axis A1 at right angles.

3. Insert according to claim 2, characterised in that the length of the bearing surface (15), along a circumference of said cylinder to which the bearing surface (15) is conformed, is greater than the length of the bearing surface (15) measured parallel to the axis A1.

4. Insert according to any one of the preceding claims, characterised in that the endpiece comprises a collar (13), and in that the tubular conduit (19) of said endpiece is threaded or has a threaded metal insert (25), notably a brass insert.

5. Insert according to any one of the preceding claims, characterised in that it comprises channels (21) connecting through-holes (18), at the bearing surface (15), to the inner wall of the tubular conduit (19) of the endpiece.

6. Insert according to claim 5, characterised in that it comprises means (23) for guiding the flow of the overmoulding material, notably ribs arranged on the bearing surface (15).

7. Insert according to any one of the preceding claims, characterised in that the bearing surface (15) comprises spacers (20), notably hemispherical in shape, capable of ensuring the relative positioning of the insert in relation to the outer surface of a tubular conduit (2) during the overmoulding operation.

8. T-shaped connection on an elastomeric tubular conduit of axis A1 comprising a tubular conduit (19) of axis A2 perpendicular to the axis A1, characterised in that it comprises an insert (12), according to any one of the preceding claims, the bearing surface (15) of which is embedded in an elastomer overmoulding (14).

9. Connection according to claim 8, characterised in that the geometry and hardness of the elastomer of the overmoulding (14) and the geometry of the insert (12) are adapted to provide a resistance to torques around the axis A2 greater than or equal to 24 Nm.

10. Connection according to claim 8 or 9, characterised in that the elastomer overmoulding (14) is in the form of a stud.

11. Connection according to claim 8 or 9, characterised in that the elastomer overmoulding (14) is substantially in the form of a sleeve.

12. Process for producing a T-shaped connection on an elastomeric tubular conduit comprising the steps of:
perforating said elastomeric tubular conduit (2) ;
applying, to the outer wall of an elastomeric tubular conduit (2), a bearing surface (15) of an insert (12) in which through-holes (18) have been provided, said insert comprising a tubular conduit (19) forming an endpiece, one end of said tubular conduit (19) which forms an endpiece opening out on said bearing surface (15) opposite the perforation in the tubular conduit (2);
overmoulding the bearing surface (15) of the insert (12) with elastomer;
vulcanising the elastomer of the overmoulding.

13. Process according to claim 12, characterised in that it comprises a step of fixing the insert (12) to the elastomeric tubular conduit (2) by means of a pin (26).

14. Process according to claim 13, characterised in that it comprises a step consisting of:
driving a core pin (35) into the tubular conduit (2), said core pin comprising a hole (30);
driving a section of the pin (26) through the tubular conduit (19) forming an endpiece into the hole (30) of the core pin (35) through an opening formed in the wall of the elastomeric tubular conduit (2).

15. Process according to claim 13 or 14, characterised in that it comprises a step prior to the overmoulding, consisting of immobilising the pin (26) in a mould (39) in such a way as to ensure that the insert (12) is held in place during the overmoulding.

16. Process according to any one of claims 12 to 15, characterised in that the overmoulding is carried out with an elastomer having a hardness greater than 50 Shore A.

17. Tooling for producing the connection according to claims 8 to 11, comprising:
an insert (12) comprising a bearing surface (15) on a tubular conduit (2) conforming substantially to a portion of the surface of the outer wall of the tubular conduit, through-holes (18) opening out on the bearing surface (15);
a pin (26) comprising means (27, 32) for temporarily holding the insert (12) on an elastomeric tubular conduit (2), means (31) for perforating the wall of said tubular elastomer conduit (2) and means (33) for cooperating with holding means (43) for an overmoulding mould (39);
a core pin (35) for penetrating into an elastomeric tubular conduit (2);
a mould (39) for receiving the elastomeric tubular conduit (2) fitted over the core pin (35) and on which is fixed an insert (12) via the pin (26), said mould (39) comprising an impression of the outer surface of the overmoulding (14) which is to be produced and means (43) for temporarily holding the pin (26) during the operation of adding the elastomer.

18. Tooling according to claim 17, characterised in that the pin (26) comprises temporary holding means (27, 29) cooperating with the means for holding the core pin (35), notably the pin (26) comprises a rod (27) capable of penetrating into a hole (30) in the core pin (35).

19. Tooling according to claim 17 or 18, characterised in that the pin (26) has a shoulder (33) forming the means for holding the pin (26) in the mould (39) and in that the mould (39) comprises a recess (43) for accommodating said shoulder (33).

20. Tooling according to claim 17, 18 or 19, characterised in that the impression (40) of the overmoulding (14) corresponds to a sleeve surrounding the tubular elastomer conduit (2).

21. Tooling according to claim 17, 18 or 19, characterised in that the impression (40) of the overmoulding (14) corresponds to a stud formed on the elastomeric tubular conduit (2).
